# EUROPÄISCHE PATENTSCHRIFT

(11) **EP 3 921 263 B1**
(45) Veröffentlichungstag und Bekanntmachung des Hinweises auf die Patenterteilung: **24.05.2023**
(21) Anmeldenummer: 20702046.2
(22) Anmeldetag: 03.02.2020
(51) Int. Cl.: B66B 1/46, B66B 3/00

(54) **AUFZUGSANLAGE MIT AUFZUGSBEDIENEINRICHTUNGEN FÜR PASSAGIERE MIT KÖRPERLICHEN EINSCHRÄNKUNGEN**
LIFT ASSEMBLY WITH LIFT OPERATION DEVICES FOR PASSENGERS WITH PHYSICAL CONSTRAINTS
INSTALLATION D'ASCENSEUR POURVU DE DISPOSITIFS DE COMMANDE D'ASCENSEUR POUR PASSAGERS PRÉSENTANT DES LIMITATIONS PHYSIQUES

(30) Priorität: 08.02.2019 EP 19156119
(43) Veröffentlichungstag der Anmeldung: 15.12.2021
(73) Patentinhaber: INVENTIO AG, 6052 Hergiswil (CH)
(72) Erfinder: ACKERMANN, Marcel, 9533 Kirchberg SG (CH); HÄFLIGER, Nicolas, 6315 Oberägeri (CH)
(74) Vertreter: Inventio AG
(86) Internationale Anmeldenummer: PCT/EP2020/052605
(87) Internationale Veröffentlichungsnummer: WO 2020/161069

(56) Entgegenhaltungen:
- WO-A1-2009/144259
- US-A- 4 678 062
- US-A1- 2004 000 453

## Beschreibung

Die hier beschriebene Technologie betrifft allgemein eine Aufzugsanlage in einem Gebäude. Ausführungsbeispiele der Technologie betreffen insbesondere eine Aufzugsanlage mit Aufzugsbedieneinrichtungen für Passagiere mit körperlichen Einschränkungen und ein Verfahren zum Betreiben einer solchen Aufzugsanlage.

In Gebäuden mit Aufzugsanlagen sind auf den einzelnen Stockwerken Aufzugsbedieneinrichtungen angeordnet, mit denen ein Passagier einen Aufzug rufen kann. In bekannten Aufzugsanlagen hat eine auf einem Stockwerk angeordnete Aufzugsbedieneinrichtung Auf/Ab Tasten, damit der Passagier die gewünschte Fahrtrichtung eingeben kann. In der Aufzugskabine ist in dieser Aufzugsanlage eine Kabinenbedieneinrichtung vorhanden, mit der der Passagier in der Aufzugskabine das gewünschte Zielstockwerk eingeben kann. In anderen bekannten Aufzugsanlagen kann der Passagier an einer Aufzugsbedieneinrichtung bereits auf dem Stockwerk das Zielstockwerk eingeben. Die Aufzugsanlage ist dafür mit einer Zielrufsteuerungstechnologie ausgestattet, und die auf den Stockwerken angeordneten Aufzugsbedieneinrichtungen haben für die Eingabe des Zielstockwerks jeweils entweder eine Tastatur, einen berührungsempfindlichen Bildschirm und/oder eine Datenerfassungseinrichtung (z. B. in Form eines aus EP 0 699 617 B1 bekannten RFID Kartenlesers).

Aufzugsbedieneinrichtungen sollen auch für Passagier mit körperlichen Einschränkungen komfortabel und zuverlässig bedienbar sein. Die körperlichen Einschränkungen können beispielsweise das Sehen, das Hören oder die körperliche Mobilität betreffen. Um diesen Anforderungen gerecht zu werden, sind unterschiedliche Ansätze bekannt. Allgemein bekannt sind beispielsweise Aufzugsbedienreinrichtungen, die jeweils eine spezielle Taste (z. B. mit einem Symbol für einen Rollstuhl) haben oder anzeigen. Wird diese Taste betätigt, wechselt die Aufzugsanlage in einen behindertengerechten Betriebsmodus. Ausserdem ist z. B. aus EP 2 331 443 B1 bekannt, dass eine Aufzugsbedieneinrichtung mit einem berührungsempfindlichen Bildschirm in einen speziellen Eingabemodus wechselt, wenn eine Art umherirrende Bewegung auf dem Tastschirm erkannt wird.

US 2004/000453 A1 offenbart ein System, das es einer behinderten Person ermöglicht, ein Zielstockwerk in einem Aufzug unter Verwendung einer einzigen Steuerung auszuwählen. Das System zählt sequentiell potenzielle Zielstockwerke auf, um der Person die Auswahl eines ausgewählten Zielstockwerks zu ermöglichen. Hat die Person das Zielstockwerk gewählt, wird der Aufzug entsprechend verfahren.

Obwohl die genannten Ansätze die Bedienung einer Aufzugsanlage durch einen Passagier mit einer körperlichen Einschränkung erleichtern, können berührungsempfindliche Bildschirme mit einer glatten Oberfläche trotzdem eine Erschwernis bei der Bedienung darstellen, insbesondere für Passagiere mit eingeschränkter Sehfähigkeit. Es besteht daher ein Bedarf an einer Technologie, die die Bedienung erleichtert.

Ein Aspekt der hier beschriebenen Technologie betrifft eine Aufzugsanlage, in der eine Anzahl von Aufzugskabinen gesteuert durch eine Aufzugssteuerung zwischen Stockwerken verfahrbar ist. Hauptbedieneinrichtungen sind mit der Aufzugssteuerung kommunikativ verbunden und auf den Stockwerken angeordnet, wobei eine Hauptbedieneinrichtung jeweils für eine Eingabe eines von einem Passagier gewünschten Zielstockwerks und für eine Ausgabe von Fahrtinformation ausgestaltet ist. Mindestens eine Nebenbedieneinrichtung ist auf einem der Stockwerke bei der dort angeordneten Hauptbedieneinrichtung angeordnet und mit der Aufzugssteuerung kommunikativ verbunden. Die mindestens eine Nebenbedieneinrichtung hat ein berührungsempfindliches Bildschirmsystem, das ausgestaltet ist, ein durch eine Berührung eingegebenes Zielstockwerk durch eine taktil wahrnehmbare Rückmeldung zu bestätigen, um einen Passagier mit einer körperlichen Einschränkung bei einer Rufeingabe zu unterstützen. Die Aufzugssteuerung ist ausgestaltet, für das an der mindestens einen Nebenbedieneinrichtung eingegebene Zielstockwerk Fahrtinformation zu ermitteln und diese ermittelte Fahrtinformation mittels der bei der mindestens einen Nebenbedieneinrichtung angeordneten Hauptbedieneinrichtung dem Passagier zu kommunizieren.

Ein anderer Aspekt der Technologie betrifft ein Verfahren zum Betreiben einer Aufzugsanlage, in der mit einer Aufzugssteuerung kommunikativ verbundene Hauptbedieneinrichtungen auf Stockwerken angeordnet sind und in der mindestens eine Nebenbedieneinrichtung auf einem der Stockwerke bei der dort angeordneten Hauptbedieneinrichtung angeordnet und mit der Aufzugssteuerung kommunikativ verbunden ist. Die mindestens eine Nebenbedieneinrichtung hat ein berührungsempfindliches Bildschirmsystem, das ausgestaltet ist, ein durch eine Berührung eingegebenes Zielstockwerk durch eine taktil wahrnehmbare Rückmeldung zu bestätigen, um einen Passagier mit einer körperlichen Einschränkung bei einer Rufeingabe zu unterstützen. Gemäss dem Verfahren wird ein von einem Passagier eingegebener Zielruf durch die Aufzugsteuerung empfangen und mittels des Zielrufs wird durch die Aufzugsteuerung eine erste Kennung ermittelt. Die erste Kennung identifiziert die Hauptbedieneinrichtung oder die mindestens eine Nebenbedieneinrichtung, von der der empfangene Zielruf stammt. Für den empfangenen Zielruf ermittelt die Aufzugsteuerung Fahrtinformation. Wenn der Zielruf von der mindesten einen Nebenbedieneinrichtung stammt, wird durch die Aufzugsteuerung eine zweite Kennung ermittelt, die eine Hauptbedieneinrichtung identifiziert, die bei der mindestens einen Nebenbedieneinrichtung auf dem Stockwerk angeordnet ist. Die für den an der mindestens einen Nebenbedieneinrichtung eingegebenen Zielruf ermittelte Fahrtinformation wird durch die Hauptbedieneinrichtung an den Passagier kommuniziert, wobei die Hauptbedieneinrichtung durch die zweite Kennung identifiziert wird.

Durch die hier beschriebene Technologie wird eine Aufzugsanlage geschaffen, bei der Passagiere mit einer körperlichen Einschränkung ein gewünschtes Zielstockwerk an einer Nebenbedieneinrichtung eingeben können. Zumindest auf einem Stockwerk ist eine Nebenbedieneinrichtung zusätzlich zu einer Hauptbedieneinrichtung, wie sie beispielsweise in Aufzugsanlagen mit Zielrufsteuerungstechnologie Verwendung findet, angeordnet. Die Nebenbedieneinrichtung ist dafür speziell ausgestaltet, insbesondere unterstützt sie einen Passagier mit einer körperlichen Einschränkung bei der Rufeingabe und bestätigt das eingegebene Zielstockwerk durch eine taktil wahrnehmbare Rückmeldung. Die ermittelte Fahrtinformation wird zum Passagier jedoch nicht mittels der Nebenbedieneinrichtung kommuniziert, sondern mittels der benachbart angeordneten Hauptbedieneinrichtung.

Die Nebenbedieneinrichtung gemäss der hier beschriebenen Technologie kann vorteilhaft in Kombination mit bekannten Aufzugsbedieneinrichtungen verwendet werden, bei denen Zielstockwerke an berührungsempfindlichen Bildschirmen einzugeben sind. Deren Nutzung kann insbesondere für Passagiere mit eingeschränkter Sehfähigkeit mit Schwierigkeiten verbunden sein. Bezogen auf die Hauptbedieneinrichtung kann die Nebenbedieneinrichtung als Hilfs- oder Erweiterungskomponente aufgefasst werden.

Passagiere mit einer körperlichen Einschränkung können die Nebenbedieneinrichtung nutzen, sie können beispielsweise mittels einer Wegweisung zum Standort der Nebenbedieneinrichtung gelangen (z. B. mit Hilfe eines Blindenstocks oder Blindenhunds), um dann durch der Nebenbedieneinrichtung bei der Rufeingabe unterstützt zu werden, beispielsweise mittels Sprachführung und der taktil wahrnehmbaren Rückmeldung.

Passagiere ohne eine körperliche Einschränkung können dagegen unverändert die Hauptbedieneinrichtungen nutzen, mit denen sie bereits vertraut sind. In einem Ausführungsbeispiel haben diese jeweils einen berührungsempfindlichen Bildschirm und eine Audioeinrichtung. Der berührungsempfindliche Bildschirm ist ausgestaltet, Zielstockwerken zugeordnete Eingabefelder (Tasten) anzuzeigen, eine Berührung eines der Eingabefelder zu erkennen, und für einen Zielruf ermittelte Fahrtinformation anzuzeigen. Die Audioeinrichtung ist ausgestaltet, die ermittelte Fahrtinformation anzusagen. Die Fahrtinformation kann die Aufzugskabine angeben, die den Zielruf bedient, und evtl. Weg- bzw. Richtungsangaben (z. B. links, rechts) umfassen.

Im Vergleich zur Hauptbedieneinrichtung hat die Nebenbedieneinrichtung eine reduzierte Funktionalität. Eine Einrichtung zur Kommunikation der Fahrtinformation ist in der Nebenbedieneinrichtung beispielsweise nicht erforderlich, weil diese Kommunikation mittels der benachbarten Hauptbedieneinrichtung erfolgt. Deswegen ist beispielsweise auch kein Rückkanal von der Steuereinrichtung zur Nebenbedieneinrichtung erforderlich. Eine Nebenbedieneinrichtung gemäss der hier beschriebenen Technologie hat daher eine geringe technische Komplexität und ist somit auch kostengünstig.

In einem Ausführungsbeispiel hat die Nebenbedieneinrichtung ebenso wie die Hauptbedieneinrichtungen ein berührungsempfindliches Bildschirmsystem. In der Nebenbedieneinrichtung und den Hauptbedieneinrichtungen werden daher ähnliche Eingabe- bzw. Ausgabetechnologien eingesetzt, so dass deren äusseres Erscheinungsbild und/oder Formgebung bei Bedarf entsprechend gestaltet werden können. Auf einem Stockwerk kann somit bezüglich der Aufzugsbedieneinrichtungen ein einheitlicheres Erscheinungsbild geschaffen werden.

In einem Ausführungsbeispiel haben die Hauptbedieneinrichtungen und die mindestens eine Nebenbedieneinrichtung jeweils ein Gehäuse, wobei das Gehäuse der mindestens einen Nebenbedieneinrichtung benachbart zum Gehäuse der neben ihr vorhandenen Hauptbedieneinrichtung angeordnet ist. Die mindestens eine Nebenbedieneinrichtung kann dadurch flexible und unabhängig von der Hauptbedieneinrichtung angeordnet werden, die Gehäuse können sich berühren oder mit mehr oder weniger grossem Abstand zueinander angeordnet werden.

Flexibilität ist auch dadurch gegeben, dass in einem Ausführungsbeispiel die Hauptbedieneinrichtungen und die mindestens eine Nebenbedieneinrichtung durch ein Kommunikationsnetzwerk mit der Aufzugssteuerung kommunikativ verbunden sind. Beispielsweise können die Aufzugsbedieneinrichtungen unabhängig voneinander mit dem Kommunikationsnetzwerk kommunikativ verbunden werden. In einem Ausführungsbeispiel ermöglicht das Kommunikationsnetzwerk zudem die Versorgung mit elektrischer Energie (Power over Ethernet), so dass keine getrennten Leitungen für die Energieversorgung bereitgestellt werden müssen.

In einem Ausführungsbeispiel umfasst das berührungsempfindliche Bildschirmsystem einen Aktuator, der bei Ansteuerung durch eine Steuerspannung eine Vibration einer Oberfläche des Bildschirmsystems verursacht, wobei die Vibration die taktil wahrnehmbare Rückmeldung darstellt. Die Art und Stärke der Vibration können dabei flexible festgelegt werden.

In einem Ausführungsbeispiel umfasst das berührungsempfindliche Bildschirmsystem eine Kraftmesseinrichtung und eine Steuereinrichtung. Die Kraftmesseinrichtung ist ausgestaltet, eine Kraft zu messen, mit der ein Passagier auf die Bedienoberfläche des berührungsempfindlichen Bildschirmsystems drückt, wobei die Steuereinrichtung ausgestaltet ist, die gemessene Kraft erst dann als Auslösekraft registriert, wenn die gemessene Kraft einen festgelegten Schwellwert erreicht. Dadurch können Fehleingaben, die durch ungewolltes Berühren verursacht werden, reduziert werden, weil der Passagier seinen Wunsch durch stärkeres Drücken ausdrücken muss.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation in einem Gebäude mit mehreren Stockwerken und einer beispielhaften Aufzugsanlage;
- Fig. 2: schematische Darstellungen von beispielhaften Aufzugsbedieneinrichtungen, die in der Aufzugsanlage gemäss Fig. 1 auf einem Stockwerk angeordnet sind; und
- Fig. 3: eine beispielhafte Darstellung eines Ausführungsbeispiels eines Verfahrens zum Betreiben der Aufzugsanlage.

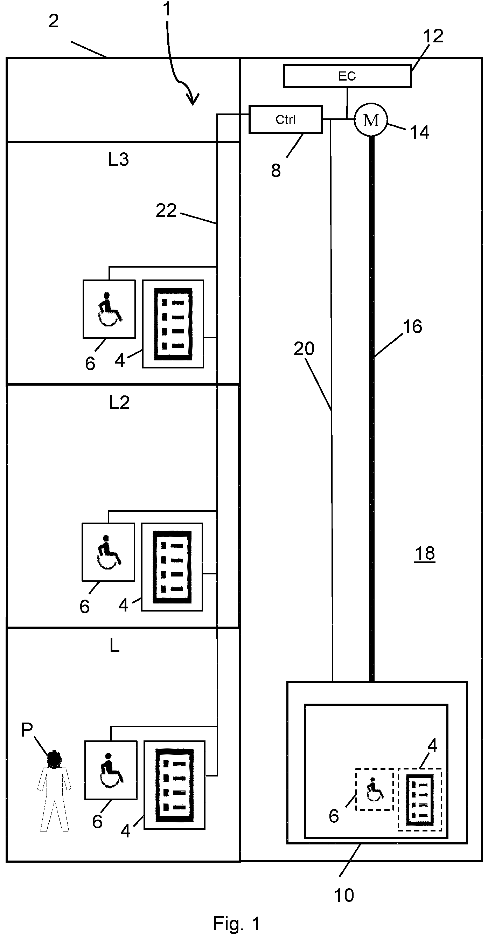

Fig. 1 ist eine schematische Darstellung einer beispielhaften Situation in einem Gebäude 2, das mehrere Stockwerke L, L1, L2 hat, die von einer Aufzugsanlage 1 bedient werden. Das Stockwerk L kann eine Eingangshalle des Gebäudes 2 sein, in die Passagiere P beim Betreten des Gebäudes 2 gelangen und von dem aus sie das Gebäude 2 wieder verlassen. Betritt ein Passagier P das Stockwerk L, kann von dort aus - bei entsprechender Zugangsberechtigung - jedes Stockwerk L1, L2 des Gebäudes 2 mit der Aufzugsanlage 1 erreicht werden. Aus Darstellungsgründen sind in Fig. 1 von der Aufzugsanlage 1 nur eine Aufzugssteuerung 8, 12, eine Antriebsmaschine 14, ein Tragmittel 16 (z. B. Stahlseile oder Flachriemen), eine am Tragmittel 16 hängende und in einem Schacht 18 verfahrbare Aufzugskabine 10 (im Folgenden auch als Kabine 10 bezeichnet) und eine Anzahl von Aufzugsbedieneinrichtungen 4, 6 gezeigt. Der Fachmann erkennt, dass die Aufzugsanlage 1 auch mehrere Kabinen 10 in einem oder mehreren Schächten 18 umfassen kann, die von einer Gruppensteuerung gesteuert werden. Anstelle eines in Fig. 1 dargestellten Traktionsaufzuges kann die Aufzugsanlage 1 auch einen oder mehrere Hydraulikaufzüge aufweisen.

In einem Ausführungsbeispiel ist die Aufzugsanlage 1 mit einer Zielrufsteuerungstechnologie ausgestattet. Dementsprechend ist beispielsweise auf jedem Stockwerk L, L1, L2 eine Aufzugsbedieneinrichtung 4, 6 angeordnet, an der ein Passagier P ein gewünschtes Zielstockwerk bereits auf dem Stockwerk L, L1, L2 eingeben kann; nach Eingabe des Zielstockwerks durch den Passagier P (also der Eingabe eines Zielrufs) liegen Angaben über das Einsteigestockwerk und das Zielstockwerk vor. Weitere Details zur Zielrufsteuerungstechnologie erfolgen an andere Stelle dieser Beschreibung.

Gemäss einem Ausführungsbeispiel der Aufzugsanlage 1 kommen Aufzugsbedieneinrichtungen 4, 6 zum Einsatz, die für unterschiedliche Passagiergruppen vorgesehen sind. Passagiere P, die eine körperliche Einschränkung haben, beispielsweise eine eingeschränkte Sehfähigkeit, bei Blindheit oder Bewegungseinschränkungen, können die Aufzugsbedieneinrichtung 6 nutzen, die speziell für deren Bedürfnisse ausgestaltet ist. Sowohl in Fig. 1 als auch in einer konkreten Ausgestaltung kann die Aufzugsbedieneinrichtung 6 sichtbare gekennzeichnet sein, beispielsweise ist auf einer Bedienoberfläche ein Symbol für einen Rollstuhl oder eine andere Kennzeichnung dargestellt, um deren vorgesehene Nutzung für Passagiere P mit einer körperlichen Einschränkung kenntlich zu machen. Für alle anderen Passagiere P ist die Aufzugsbedieneinrichtung 4 vorgesehen. Eine solche Aufzugsbedieneinrichtung 4 ist beispielsweise aus bekannten Aufzugsanlagen mit Zielrufsteuerungstechnologie bekannt; sie kann auf einer Bedienoberfläche beispielsweise Zielstockwerke (z. B. in Form von einzelnen Tasten) und evtl. dazugehörige stockwerkspezifischen Angaben (z. B. Restaurant, Garage, Eingangshalle) anzeigen. Wenn es für die vorliegende Beschreibung der Technologie hilfreich erscheint, sind zur besseren Unterscheidung die Aufzugsbedieneinrichtungen 4 auch als Hauptbedieneinrichtungen 4 bezeichnet und die Aufzugsbedieneinrichtung 6 auch als Nebenbedieneinrichtung 6.

In der in Fig. 1 gezeigten Situation ist die hier beschriebene Technologie in vorteilhafter Weise anwendbar. Kurz und beispielhaft zusammengefasst ermöglicht die hier beschriebene Technologie, dass auch Passagiere P mit körperlichen Einschränkungen, z. B. bei eingeschränkter Sehfähigkeit, Blindheit oder Bewegungseinschränkungen, in Aufzugsanlagen 1, bei denen für Rufeingaben berührungsempfindliche Bildschirme (im Folgenden als Touchscreen(s) bezeichnet) vorgesehen sind, Aufzugsrufe bequem und zuverlässig eingegeben werden können. Passagiere P ohne körperliche Einschränkungen können dagegen die Hauptbedieneinrichtungen 4 weiterhin so benutzen, wie sie es von bekannten Aufzugsanlagen 1 mit Zielrufsteuerungstechnologie kennen. Passagiere P, die z. B. blind sind, können zu einer der Nebenbedieneinrichtungen 6 geleitet werden (z. B. unter Nutzung eines Blindenstocks oder eines Blindenhunds), um an dieser das gewünscht Zielstockwerk L, L1, L2 durch Berühren des Touchscreens einzugeben. Wie im Folgenden beschrieben ist, unterstützt die Nebenbedieneinrichtung 6 die Eingabe des Zielstockwerks mittels einer taktil (d. h. über den Tastsinn) wahrnehmbarer Rückmeldung und einer oder mehreren Sprachmitteilungen. Unabhängig davon, ob der Passagier P die Rufeingabe an der Hauptbedieneinrichtung 4 oder an der Nebenbedieneinrichtung 6 vornimmt, informiert die Hauptbedieneinrichtung 4 den Passagier P über die dem Aufzugsruf (Zielruf) zugeteilte Kabine 10, bei einem blinden Passagier P z. B. mittels einer Sprachmitteilung.

Die Aufzugssteuerung 8, 12 besteht gemäss dem in Fig. 1 gezeigten Ausführungsbeispiel aus zwei Teilsystemen, einem Steuerungssystem 12 und einem Rufzuteilungssystem 8. Das Steuerungssystem 12 steuert das Verfahren der Aufzugskabine 10, während das Rufzuteilungssystem 8 die "beste" Aufzugskabine 10 ermittelt. Das Rufzuteilungssystem 8 führt dafür einen Zuteilungsalgorithmus aus, um einen an einer stockwerkseitigen Aufzugsbedienrichtung 4, 6 eingegebenen Zielruf einer Aufzugskabine 10 zuzuteilen. Derartige Zuteilungsalgorithmen sind dem Fachmann bekannt, beispielsweise aus EP 1 276 691 B1. Der Fachmann erkennt, dass - je nach Ausgestaltung der Aufzugsanlage 1 - der Zuteilungsalgorithmus auch unter Einbeziehung der stockwerkseitigen Aufzugsbedienrichtungen 4, 6 erfolgen kann, wie z. B. in EP 1 276 691 B1 beschrieben. Das Steuerungssystem 12 steuert die Antriebsmaschine 14 u. a. so an, dass die zugeteilte Kabine 10 mit dem Passagier P vom Einsteigestockwerk auf das Zielstockwerk verfahren wird.

Gemäss dem in Fig. 1 gezeigten Ausführungsbeispiel sind auf jedem Stockwerk L, L1, L2 eine Hauptbedieneinrichtung 4 und eine Nebenbedieneinrichtung 6 angeordnet, wobei jede über ein Kommunikationsnetzwerk 22 an die Aufzugssteuerung 8, 12 gekoppelt ist. Wie in Fig. 1 angedeutet, hat jede Aufzugsbedieneinrichtung 4, 6 ein Gehäuse, wobei die Gehäuse bzw. die Aufzugsbedieneinrichtungen 4, 6 relativ nahe zueinander angeordnet sind. Der Fachmann erkennt, dass deren Anordnung an die im Gebäude 2 gegebene Situation angepasst werden kann. Die Gehäuse der Aufzugsbedieneinrichtungen 4, 6 können sich beispielsweise berühren oder einen relativ kleinen Abstand zueinander haben; der Gehäuseabstand kann aber auch so gewählt werden, dass beispielsweise ein Passagier P in einem Rollstuhl oder mit einem Blindenhund einen Zielruf an der Nebenbedieneinrichtung 6 eingeben kann, während sich ein anderer Passagier P bei der Hauptbedieneinrichtung 4 aufhält.

Je nach Art und Nutzung des Gebäudes 2 kann auf einem oder mehreren Stockwerken L, L1, L2 nur ein Typ dieser Aufzugsbedieneinrichtungen 4, 6 vorhanden sein. In einem Ausführungsbeispiel kann eine Nebenbedieneinrichtung 6 z. B. nur in einer Eingangshalle des Gebäudes 2 bei der Hauptbedieneinrichtung 4 angeordnet sein. Die Nebenbedieneinrichtung 6 ist kommunikativ mit dem Kommunikationsnetzwerk 22 verbunden. Die Nebenbedieneinrichtung 6 kann direkt mit dem Kommunikationsnetzwerk 22 verbunden sein, wie in Fig. 1 gezeigt, oder mittelbar über die Hautbedieneinrichtung 4; im letztgenannten Fall ist die Nebenbedieneinrichtung 6 mit der Hauptbedieneinrichtung 4 verbunden, welche wiederum mit dem Kommunikationsnetzwerk 22 verbunden ist. In einem Ausführungsbeispiel werden die Aufzugsbedieneinrichtungen 4, 6 über das Kommunikationsnetzwerk 22 mit elektrischer Energie versorgt, beispielsweise mittels einer als Power over Ethernet (PoE) bekannten Technologie.

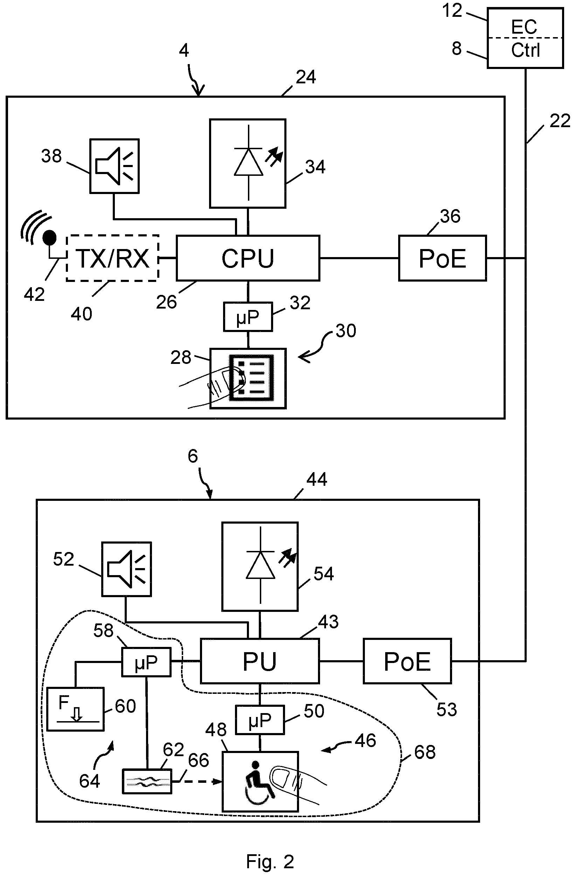

Fig. 2 zeigt schematische Darstellungen von Ausführungsbeispielen der Hauptbedieneinrichtung 4 und der Nebenbedieneinrichtung 6, wie sie in der Aufzugsanlage 1 gemäss Fig. 1 auf einem Stockwerk L, L1, L2 verwendet werden können. Die Aufzugsbedieneinrichtungen 4, 6 sind über das Kommunikationsnetzwerk 22 mit der Aufzugssteuerung 8, 12 kommunikativ verbunden. Die Hauptbedieneinrichtung 4 hat ein Gehäuse 24 und die Nebenbedieneinrichtung 6 hat ein Gehäuse 44, wodurch die Aufzugsbedieneinrichtungen 4, 6 an einer Gebäudewand oder auf dem Boden stehend angeordnet werden können. Der Fachmann erkennt, dass die Gehäuse 24, 44 u. U. entfallen können, wenn die Aufzugsbedieneinrichtungen 4, 6 in eine Gebäudewand oder einen Türrahmen einer stockwerkseitigen Aufzugstür eingebaut werden. Der Fachmann erkennt zudem, dass die Aufzugsbedieneinrichtungen 4, 6 in einer benutzergerechten, oder durch eine Norm vorgeschriebenen Höhe angeordnet sind.

Im Gehäuse 24 der Hauptbedieneinrichtung 4 sind im gezeigten Ausführungsbeispiel ein berührungsempfindlicher Bildschirm 30 (Touchscreen 30), eine zentrale Steuer- und Verarbeitungseinrichtung 26 (CPU), eine Beleuchtungseinrichtung 34, ein elektroakustischer Wandler 52 (z. B. ein Lautsprecher) und eine Kommunikationseinrichtung 36 (PoE, Power over Ethernet) angeordnet. Je nach Ausgestaltung der Aufzugsbedieneinrichtung 6 kann im Gehäuse 24 eine Sende- und Empfangseinrichtung für Funksignale 40 (TX/RX) mit einer Antenne 42 angeordnet sein (als optionale Komponente ist die Sende- und Empfangseinrichtung für Funksignale 40 gestrichelt eingezeichnet). Die zentrale Steuer- und Verarbeitungseinrichtung 26 ist mit den genannten Komponenten kommunikativ verbunden, um den Betrieb und die Aufgaben der Hauptbedieneinrichtung 6 zu gewährleisten.

Der Touchscreen 30 umfasst einen Prozessor 32 und eine Bedienoberfläche 28, auf der in Fig. 2 Eingabetasten illustriert sind. Da eine durchsichtige Glasplatte (nicht gezeigt) den Touchscreen 30 abdeckt, sind die Eingabetasten für den Passagier P sichtbar. Der Prozessor 32 ist mit der zentralen Steuer- und Verarbeitungseinrichtung 26 verbunden und erzeugt beispielsweise ein Signal, wenn ein Passagier P eine der dargestellten Eingabetasten mit einem Finger berührt. Die Eingabetasten sind Zielstockwerken zugeordnet, wobei zusätzlich stockwerkspezifische Angaben angezeigt werden können. Die Struktur und Funktion eines Touchscreens sind dem Fachmann bekannt, so dass weitergehende Ausführungen hierzu nicht erforderlich erscheinen.

Die Beleuchtungseinrichtung 34 dient dazu, um die Bedienoberfläche 28 der Aufzugsbedieneinrichtung 6, oder lediglich Bereiche der Bedienoberfläche 28, zu beleuchten. Gesteuert von der zentralen Steuer- und Verarbeitungseinrichtung 26 kann die Beleuchtungseinrichtung 34 die Bedienoberfläche 28 ausleuchten, damit die angezeigten Eingabetasten von einem Passagier P wahrnehmbar sind, insbesondere bei schlechten Lichtverhältnissen. Die Beleuchtungseinrichtung 34 kann die Bedienoberfläche 28 bzw. einzelne Eingabetasten auch mit farbigem Licht beleuchten, um dem Nutzer 4 die Eingabe eines Aufzugsrufs zu bestätigen. In einem Ausführungsbeispiel umfasst die Beleuchtungseinrichtung 34 eine oder mehrere LED Lichtquellen.

An der Hauptbedieneinrichtung 4 kann ein Passagier durch Berühren einer der angezeigten Eingabetasten ein Zielstockwerk auswählen und somit einen Aufzugsruf (Zielruf) zu einem beliebigen Zielstockwerk eingeben. Ist diesem Zielruf eine Kabine 10 zugeteilt, steuert die zentrale Steuer- und Verarbeitungseinrichtung 26 den Touchscreen 30 an, um auf dessen Bedienoberfläche 28 einen Bezeichner für die den Zielruf bedienende Kabine 10 (z. B. einen Buchstaben oder eine Nummer) und evtl. Richtungsangaben anzuzeigen. Zusätzlich kann die zentrale Steuer- und Verarbeitungseinrichtung 26 den Wandler 38 (Lautsprecher) ansteuern, um eine entsprechende Sprachmitteilung (z. B. Kabinen- und Richtungsangaben) zu erzeugen.

In einem Ausführungsbeispiel kann die Sende- und Empfangseinrichtung für Funksignale 40 (TX/RX) (wenn vorhanden) eine alternative oder zusätzliche Möglichkeit für die Rufeingabe bieten. Die Sende- und Empfangseinrichtung für Funksignale 40 kann ein RFID Lesegerät, ein Lesegerät für einen optischen Code (z. B. Strichcode, QR Code oder Farbcode) oder ein Funkmodul, das mit einem tragbaren Kommunikationsgerät (z. B. Mobilfunkgerät/Mobiltelefon, Smartphone, Tablet PC) eines Passagiers P kommuniziert, umfassen, um die Rufeingabe zu ermöglichen. Der Fachmann erkennt, dass dem Passagier P auch bei diesen Alternativen die den Aufzugsruf bedienende Kabine 10 mitgeteilt wird, beispielsweise mittels des Touchscreens 30.

Im Gehäuse 44 der Nebenbedieneinrichtung 6 sind im gezeigten Ausführungsbeispiel ein Touchscreen 46 (unter einer Glasplatte angeordnet), eine Kommunikationseinrichtung 53 (PoE) und eine Beleuchtungseinrichtung 54 angeordnet. Diese Komponenten dienen wie in der Hauptbedieneinrichtung 4 zur Darstellung einer Bedienoberfläche 48, der Kommunikation (einschliesslich Energieversorgung) und der Beleuchtung. Ein elektroakustischer Wandler 56 (z. B. ein Lautsprecher oder Summer) kann optional vorgesehen sein, um eine akustische Rückmeldung, z. B. beim Berühren des Touchscreens 46, zu erzeugen. Der Touchscreen 46 umfasst einen Prozessor 50 und die Bedienoberfläche 48, auf der in Fig. 2 ein Rollstuhlsymbol illustriert ist. Der Prozessor 50 ist mit einer Verarbeitungseinrichtung 43 (PU) verbunden und detektiert beispielsweise ein Signal, wenn ein Passagier P die Bedienoberfläche 48 mit einem Finger berührt.

In einem Ausführungsbeispiel der Nebenbedieneinrichtung 6 ist der Touchscreen 46 mit einer Einrichtung 64 kombiniert, woraus sich ein berührungsempfindliches Bildschirmsystem 68. Zur Illustration ist das Bildschirmsystem 68 in Fig. 2 gestrichelt umrandet; der Fachmann erkennt, dass diese Umrandung beispielhaft ist. Durch die Einrichtung 64 wird die Wirkungsweise der Bedienoberfläche 48 modifiziert, wodurch eine unterstützte Bedienung mittels taktil wahrnehmbarer Rückmeldung ermöglicht wird. Wird die Bedienoberfläche 48 berührt, erfolgt auf diese Berührung hin eine taktil wahrnehmbare Rückmeldung. Je nach Ausgestaltung kann die taktil wahrnehmbare Rückmeldung von einem Vibrationsgeräusch und/oder einer Sprachmitteilung begleitet sein, wofür der elektroakustische Wandler 56 vorgesehen ist. Ein aus einer solchen Kombination eines Touchscreens und einer durch Berührung geführten Bedienoberfläche geschaffenes taktiles Feedback-Modul ist beispielsweise von der Firma next system Vertriebsgesellschaft, Wien, Österreich, erhältlich. Dieses Feedback-Modul ist insbesondere für blinde und sehbehinderte Personen geeignet, weil es ihnen die Orientierung auf einer glatten Oberfläche erlaubt.

Die in Fig. 2 gezeigte Einrichtung 64 umfasst eine Kraftmesseinrichtung 60 (z. B. in Gestalt einer dünnen Schicht kapazitiver Drucksensoren), einen Aktuator 62 und eine Steuereinrichtung 58, die mit der Kraftmesseinrichtung 60 und dem Aktuator 62 verbunden ist. Die Kraftmesseinrichtung 60 misst in Verbindung mit der Steuereinrichtung 58 die Kraft, mit der der Passagier P auf die Bedienoberfläche 48 des Touchscreens 46 drückt. Die Kraftmesseinrichtung 60 erfasst kleinste Veränderungen eines Abstandes zwischen der (biegsamen) Glasoberfläche und der dünnen Schicht kapazitiver Drucksensoren bzw. einer darunterliegenden Schicht. In einem Ausführungsbeispiel ist die Steuereinrichtung 58 so konfiguriert, dass sie die gemessene Kraft erst dann als Auslösekraft registriert, wenn die gemessene Kraft einen festgelegten Schwellwert erreicht; erst dann wird die Berührung als bewusstes Drücken bzw. als bewusste Eingabe gewertet.

Der Aktuator 62 umfasst in einem Ausführungsbeispiel zwei Elektrodenplatten, wobei eine erste Elektrodenplatte als leitendendes Gitter ausgebildet und mit der Gehäuseglasplatte starr verbunden ist und wobei eine zweite Elektrodenplatte mit dem Touchscreen 46 zu gemeinsamer Bewegung verbunden ist. Ein Rückstellelement hält die Elektrodenplatte in einem gewünschten Abstand. Eine solche Anordnung kann als elektrostatischer Parallelplatten-Aktuator bezeichnet werden. Steuert die Steuereinrichtung 58 den Aktuator 62 durch Anlegen einer Spannung, deren Parameter wie z. B. Spannung, Frequenz, steigende und fallende Flanken festgelegt werden können, an (z. B. nach Überschreiten der Auslösekraft), bewegen sich die Elektrodenplatten entgegen einer vom Rückstellelement ausgeübten Kraft relativ zueinander; entsprechend dazu bewegt sich die Glasplatte, wodurch die taktil wahrnehmbare Rückmeldung erzeugt wird. Die Wirkung des Aktuators 62 auf die Bedienoberfläche 48 ist in Fig. 2 durch einen Pfeil 66 angedeutet.

Das Kommunikationsnetzwerk 22 verbindet die Aufzugsbedieneinrichtungen 4, 6 mit der Aufzugssteuerung 8, 12 und ermöglicht dadurch eine Kommunikation zwischen der Aufzugssteuerung 8, 12 und den Aufzugsbedieneinrichtungen 4, 6. Für diese Kommunikation können die Aufzugsbedieneinrichtungen 4, 6 und die Aufzugssteuerung 8, 12 direkt oder indirekt mit dem Kommunikationsnetzwerk 22 verbunden sein. Das Kommunikationsnetzwerk 22 kann ein Kommunikationsbussystem, einzelne Datenleitungen oder eine Kombination daraus umfassen. Je nach Implementierung des Kommunikationsnetzwerkes 22 können der Aufzugssteuerung 8, 12 und jeder Aufzugsbedieneinrichtung 4, 6 individuelle Adressen und/oder Kennungen zugeteilt sein, so dass beispielsweise die Aufzugssteuerung 8, 12 eine Nachricht gezielt an eine gewünschte Aufzugsbedieneinrichtung 4, 6 senden kann. Die Kommunikation kann gemäss einem Protokoll für leitungsgebundene Kommunikation, beispielsweise dem Ethernet Protokoll, erfolgen. Wie erwähnt erfolgt in einem Ausführungsbeispiel die Versorgung der Aufzugsbedieneinrichtungen 4, 6 mit elektrischer Energie über das Kommunikationsnetzwerk 22 (PoE).

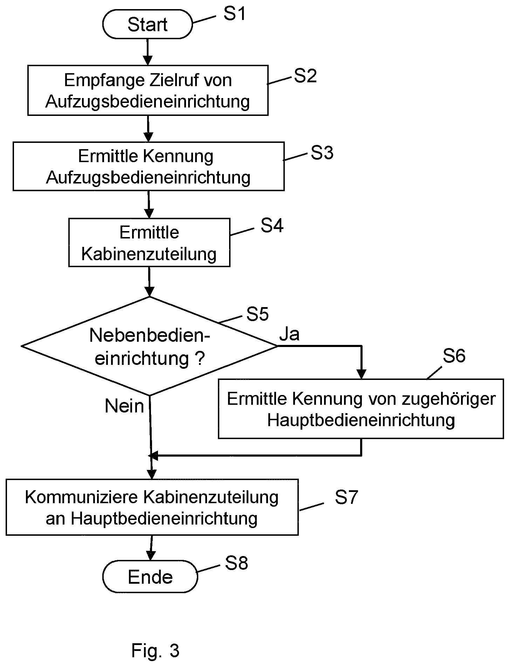

Mit dem Verständnis der oben beschriebenen prinzipiellen Systemkomponenten der Aufzugsanlage 1 und deren Funktionalitäten, erfolgt im Folgenden anhand von Fig. 3 eine Beschreibung eines beispielhaften Verfahrens zum Betreiben der in Fig. 1 gezeigten Aufzugsanlage 1. Fig. 3 zeigt ein beispielhaftes Ablaufdiagramm des Verfahrens, es beginnt in einem Schritt S1 und endet in einem Schritt S8. Der Fachmann erkennt, dass die Aufteilung in diese Schritte beispielhaft ist und dass einer oder mehrere dieser Schritte in einen oder mehrere Teilschritte aufgeteilt oder dass mehrere der Schritte zu einem Schritt zusammengefasst werden können.

Die Beschreibung des Verfahrens erfolgt mit Bezug auf einen Passagier P mit einer der genannten körperlichen Einschränkungen. Dabei ist angenommen, dass der Passagier P sich auf einem Stockwerk L, L1, L2 in Griffweite zu einer dort angeordneten Nebenbedieneinrichtung 6 befindet und an ihr einen Zielruf eingeben möchte, um von diesem Stockwerk L, L1, L2 aus mit dem Aufzug auf ein Zielstockwerk L, L1, L2 befördert zu werden. Jede Aufzugsbedieneinrichtung 4, 6 ist aktiviert. Auf der Bedienoberfläche 48 der Nebenbedieneinrichtung 6 wird beispielsweise das Symbol für einen Rollstuhl angezeigt, und auf der Bedienoberfläche 28 der Hauptbedieneinrichtung 4 werden beispielsweise Tasten für Zielstockwerk und evtl. dazugehörige stockwerkspezifische Angaben angezeigt. Wie in Fig. 1 angedeutet, ist dabei die Hauptbedieneinrichtung 4 nahe der Nebenbedieneinrichtung 6 angeordnet.

Berührt der Passagier P die Bedienoberfläche 48 der Nebenbedieneinrichtung 6, erkennt die Steuereinrichtung 50 des Touchscreens 46, an welcher Stelle die Berührung erfolgt, und erzeugt mittels dem elektroakustischen Wandlers 56 eine Sprachmitteilung, die ein dieser Stelle (Taste) zugeordnetes Stockwerk L, L1, L2 angibt. Gleichzeitig dazu wird durch den Aktuator 62 eine taktil wahrnehmbare Rückmeldung erzeugt. Bewegt der Passagier P einen Finger über die Bedienoberfläche 48 wird für jede einem Stockwerk L, L1, L2 zugeordnete Stelle (Taste) das dazugehörige Stockwerk L, L1, L2 angesagt und taktil wahrnehmbar rückgemeldet. Befindet sich der Finger an der gewünschten Stelle (Taste), kann der Passagier an dieser Stelle die Druckkraft erhöhen, welches die Kraftmesseinrichtung 60 erkennt, um den Zielruf einzugeben.

In einem Schritt S2 wird der so eingegebene Zielruf empfangen. Mit dem Empfang des Zielrufs liegen Angaben über das Einsteigestockwerk und das Zielstockwerk vor, so dass mit diesen Angaben ein Zuteilungsalgorithmus eine Kabine 10 für diese Fahrt auswählen und zuteilen kann. In einem Ausführungsbeispiel empfängt das Rufzuteilungssystem 8 den Zielruf.

In einem Schritt S3 wird eine Kennung der Nebenbedieneinrichtung 6 ermittelt. Eine solche Kennung liegt mit dem Empfang des Zielrufs vor; sie identifiziert allgemein die Aufzugsbedieneinrichtung 4, 6, von der der Zielruf ausging, bzw. an der der Zielruf eingegeben wurde. Ist die Aufzugbedieneinrichtung 4, 6 identifiziert, ist auch bekannt, ob der Zielruf an einer Nebenbedieneinrichtung 6 oder an einer Hauptbedieneinrichtung 4 eingeben wurde. Aus der Kennung ergibt sich beispielsweise zudem der Standort der Aufzugsbedieneinrichtung 4, 6 und damit das Einsteigestockwerk. Der Fachmann erkennt, dass die Schritte S2 und S3 zu einem Schritt zusammengefasst werden können.

In einem Schritt S4 wird eine Kabinenzuteilung für den in Schritt S2 empfangenen Zielruf ermittelt. In einem Ausführungsbeispiel führt das Rufzuteilungssystem 8 den Zuteilungsalgorithmus aus. Der Fachmann erkennt, dass in einem anderen Ausführungsbeispiel die Ausführung des Zuteilungsalgorithmus verteilt auf das Rufzuteilungssystem 8 und evtl. weitere Komponenten der Aufzugsanlage 1 erfolgen kann, beispielsweise unter Einbeziehung der Aufzugsbedieneinrichtungen 6. Zuteilungsalgorithmen sind dem Fachmann bekannt, sie ermitteln aus einer Anzahl von vorhandenen Kabinen 10, diejenige Kabine 10, die den Zielruf unter Berücksichtigung von "Kosten" am besten bedienen kann.

In einem Schritt S5 wird geprüft, ob der Zielruf von einer Nebenbedieneinrichtung 6 stammt. Diese Prüfung erfolgt in einem Ausführungsbeispiel anhand der in Schritt S3 ermittelten Kennung. Stammt der Zielruf von einer Nebenbedieneinrichtung 6, schreitet das Verfahren entlang des Ja-Zweigs zu einem Schritt S6. Stammt der Zielruf dagegen von einer Hauptbedieneinrichtung 4, schreitet das Verfahren entlang des Nein-Zweiges zu einem Schritt S7.

Im Schritt S6 wird die in Schritt S3 ermittelte Kennung der Nebenbedieneinrichtung 6 genutzt, um die in ihrer Nähe angeordnete Hauptbedieneinrichtung 4 zu ermitteln. Angaben über die Anordnung der Aufzugsbedieneinrichtungen 4, 6 können beispielsweise in einem Installations- und/oder Gebäudeplan festgelegt sein. Bei der Ausführung des Verfahrens kann die Aufzugssteuerung 8, 12 bzw. das Rufzuteilungssystem 8 auf elektronisch gespeicherte Installations- bzw. Gebäudeplandaten zugreifen.

Im Schritt S7 wird die in Schritt S4 ermittelte Kabinenzuteilung an einer Hauptbedieneinrichtung 4 dem Passagier P kommuniziert. In einem Ausführungsbeispiel sendet das Rufzuteilungssystem 8 die Kabinenzuteilung an die durch die Kennung identifizierte Hauptbedieneinrichtung 4. Je nach Situation ist es die in Schritt S3 ermittelte Kennung, wenn der Zielruf an dieser Hauptbedieneinrichtung 4 eingegeben wurde, oder die in Schritt S6 ermittelte Kennung, wenn der Zielruf an der (benachbarten) Nebenbedieneinrichtung 6 eingegeben wurde. Die Rufzuteilung kann dem Passagier P optisch und/oder akustisch mitgeteilt werden, beispielsweise mittels einer Sprachmitteilung.

In einem Ausführungsbeispiel erfolgt die Kommunikation der Rufzuteilung ausschliesslich an der Hauptbedieneinrichtung 4. In einem anderen Ausführungsbeispiel kann der Passagier P auch an der Nebenbedieneinrichtung über die Rufzuteilung informiert werden.

## Patentansprüche

1. Aufzugsanlage (1), in der eine Anzahl von Aufzugskabinen (10) gesteuert durch eine Aufzugssteuerung (8, 12) zwischen Stockwerken (L, L1, L2) verfahrbar ist, aufweisend:
Hauptbedieneinrichtungen (4), die mit der Aufzugssteuerung (8, 12) kommunikativ verbunden und auf den Stockwerken (L, L1, L2) angeordnet sind, wobei eine Hauptbedieneinrichtung (4) für eine Eingabe eines von einem Passagier (P) gewünschten Zielstockwerks und für eine Ausgabe von Fahrtinformation ausgestaltet ist, und
mindestens eine Nebenbedieneinrichtung (6), die auf einem der Stockwerke (L, L1, L2) bei der dort angeordneten Hauptbedieneinrichtung (4) angeordnet und mit der Aufzugssteuerung (8, 12) kommunikativ verbunden ist, **dadurch gekennzeichnet, dass**
die mindestens eine Nebenbedieneinrichtung (6) ein berührungsempfindliches Bildschirmsystem (68) hat, das ausgestaltet ist, ein durch eine Berührung eingegebenes Zielstockwerk durch eine taktil wahrnehmbare Rückmeldung zu bestätigen, um einen Passagier (P) mit einer körperlichen Einschränkung bei einer Rufeingabe zu unterstützen, und
die Aufzugssteuerung (8, 12) ausgestaltet ist, für das an der mindestens einen Nebenbedieneinrichtung (6) eingegebene Zielstockwerk Fahrtinformation zu ermitteln und diese ermittelte Fahrtinformation mittels der bei der mindestens einen Nebenbedieneinrichtung (6) angeordneten Hauptbedieneinrichtung (4) dem Passagier (P) zu kommunizieren.

2. Aufzugsanlage (1) nach Anspruch 1, bei der jede Hauptbedieneinrichtung (4) ein Gehäuse (24) hat und bei der die mindestens eine Nebenbedieneinrichtung (6) ein Gehäuse (44) hat, wobei das Gehäuse (44) der mindestens einen Nebenbedieneinrichtung (6) benachbart zum Gehäuse (24) der neben ihr vorhandenen Hauptbedieneinrichtung (4) angeordnet ist.

3. Aufzugsanlage (1) nach einem der vorhergehenden Ansprüche, bei der eine Hauptbedieneinrichtung (6) umfasst:
einen berührungsempfindlichen Bildschirm (46), der ausgestaltet ist, Zielstockwerken zugeordnete Eingabefelder anzuzeigen, eine Berührung eines der Eingabefelder zu erkennen, und für einen Zielruf ermittelte Fahrtinformation anzuzeigen, und
eine Audioeinrichtung (38), die ausgestaltet ist, die ermittelte Fahrtinformation anzusagen.

4. Aufzugsanlage nach einem der vorhergehenden Ansprüche, bei der die Hauptbedieneinrichtungen (4) und die mindestens eine Nebenbedieneinrichtung (6) durch ein Kommunikationsnetzwerk (22) mit der Aufzugssteuerung (8, 12) kommunikativ verbunden sind.

5. Aufzugsanlage nach Anspruch 4, bei der das Kommunikationsnetzwerk (22) für eine Übertragung von elektrischer Energie ausgestaltet ist und bei der die Hauptbedieneinrichtungen (4) und die mindestens eine Nebenbedieneinrichtung (6) ausgestaltet sind, durch das Kommunikationsnetzwerk (22) mit elektrischer Energie versorgt zu werden.

6. Aufzugsanlage nach einem der vorhergehenden Ansprüche, bei der das berührungsempfindliche Bildschirmsystem (68) der Nebenbedieneinrichtung (6) einen Aktuator (62) umfasst, der bei Ansteuerung durch eine Steuerspannung eine Vibration einer Oberfläche des Bildschirmsystems (68) verursacht, wobei die Vibration die taktil wahrnehmbare Rückmeldung darstellt.

7. Aufzugsanlage nach einem der vorhergehenden Ansprüche, bei der das berührungsempfindliche Bildschirmsystem (68) der Nebenbedieneinrichtung (6) eine Kraftmesseinrichtung (60) und eine Steuereinrichtung (58) umfasst, wobei die Kraftmesseinrichtung (60) ausgestaltet ist, eine Kraft zu messen, mit der ein Passagier (P) auf eine Bedienoberfläche (48) des berührungsempfindlichen Bildschirmsystems (68) drückt, und wobei die Steuereinrichtung (58) ausgestaltet ist, die gemessene Kraft erst dann als Auslösekraft zu registrieren, wenn die gemessene Kraft einen festgelegten Schwellwert erreicht.

8. Aufzugsanlage nach einem der vorhergehenden Ansprüche, bei der jede Hauptbedieneinrichtung (4) ausgestaltet ist, bei der Ermittlung von Fahrtinformation für ein eingegebenes Zielstockwerk mitzuwirken.

9. Verfahren zum Betreiben einer Aufzugsanlage (1) nach einem der Ansprüche 1-8, wobei mit einer Aufzugssteuerung (8, 12) kommunikativ verbundene Hauptbedieneinrichtungen (4) auf Stockwerken (L, L1, L2) angeordnet sind und mindestens eine Nebenbedieneinrichtung (6) auf einem der Stockwerke (L, L1, L2) getrennt von der dort angeordneten Hauptbedieneinrichtung (4) angeordnet und mit der Aufzugssteuerung (8, 12) kommunikativ verbunden ist, wobei die mindestens eine Nebenbedieneinrichtung (6) ein berührungsempfindliches Bildschirmsystem (68) hat, das ausgestaltet ist, ein durch eine Berührung eingegebenes Zielstockwerk durch eine taktil wahrnehmbare Rückmeldung zu bestätigen, um einen Passagier (P) mit einer körperlichen Einschränkung bei einer Rufeingabe zu unterstützen, umfassend:
Empfangen eines von einem Passagier (P) eingegebenen Zielrufs durch die Aufzugsteuerung (8, 12);
Ermitteln einer ersten Kennung durch die Aufzugsteuerung (8, 12) mittels des Zielrufs, wobei die erste Kennung die Hauptbedieneinrichtung (4, 6) oder die mindestens eine Nebenbedieneinrichtung (6) identifiziert, von der der empfangene Zielruf stammt;
Ermitteln von Fahrtinformation für den empfangenen Zielruf durch die Aufzugsteuerung (8, 12);
wenn der Zielruf von der mindesten einen Nebenbedieneinrichtung (6) stammt, Ermitteln durch die Aufzugsteuerung (8, 12) einer zweiten Kennung, die eine Hauptbedieneinrichtung (6) identifiziert, die bei der mindestens einen Nebenbedieneinrichtung (6) auf dem Stockwerk angeordnet ist; und
Kommunizieren der für den an der mindestens einen Nebenbedieneinrichtung (6) eingegebenen Zielruf ermittelten Fahrtinformation an den Passagier (P) mittels der durch die zweite Kennung identifizierten Hauptbedieneinrichtung (4), wobei das Kommunizieren durch die Aufzugsteuerung (8, 12) erfolgt.

10. Verfahren nach Anspruch 9, wobei durch einen berührungsempfindlichen Bildschirm (46) einer Hauptbedieneinrichtung (6) Zielstockwerken zugeordnete Eingabefelder angezeigt werden, eine Berührung eines der Eingabefelder erkannt wird und für einen Zielruf ermittelte Fahrtinformation angezeigt wird, und wobei durch eine Audioeinrichtung (38) die ermittelte Fahrtinformation angesagt wird.

11. Verfahren nach einem der Ansprüche 9 - 10, wobei das berührungsempfindliche Bildschirmsystem (68) der mindestens einen Nebenbedieneinrichtung (6) einen Aktuator (62) umfasst, durch den bei Ansteuerung durch eine Steuerspannung eine Vibration einer Oberfläche des Bildschirmsystems (68) verursacht wird, wobei die Vibration die taktil wahrnehmbare Rückmeldung darstellt.

12. Verfahren nach einem der Ansprüche 9 - 11, wobei das berührungsempfindliche Bildschirmsystem (68) der Nebenbedieneinrichtung (6) eine Kraftmesseinrichtung (60) und eine Steuereinrichtung (58) umfasst, wobei durch die Kraftmesseinrichtung (60) eine Kraft gemessen wird, mit der ein Passagier (P) auf eine Bedienoberfläche (48) des berührungsempfindlichen Bildschirmsystems (68) drückt, und wobei durch die Steuereinrichtung (58) die gemessene Kraft erst dann als Auslösekraft registriert wird, wenn die gemessene Kraft einen festgelegten Schwellwert erreicht.

## Claims

1. Elevator installation (1) in which a number of elevator cars (10), controlled by an elevator controller (8, 12), can be moved between floors (L, L1, L2), comprising:
main operating devices (4) which are communicatively connected to the elevator controller (8, 12) and are arranged on the floors (L, L1, L2), a main operating device (4) being configured for inputting a destination floor desired by a passenger (P) and for outputting travel information, and
at least one secondary operating device (6) which is arranged on one of the floors (L, L1, L2), next to the main operating device (4) arranged there, and is communicatively connected to the elevator controller (8, 12), **characterized in that**
the at least one secondary operating device (6) has a touch-sensitive screen system (68) which is configured to confirm a destination floor input by a touch by means of tactilely perceptible feedback in order to support a passenger (P) with a physical limitation when inputting a call, and
the elevator controller (8, 12) is configured to determine travel information for the destination floor input on the at least one secondary operating device (6) and to communicate this determined travel information to the passenger (P) by means of the main operating device (4) arranged next to the at least one secondary operating device (6).

2. Elevator installation (1) according to claim 1, in which each main operating device (4) has a housing (24) and in which the at least one secondary operating device (6) has a housing (44), wherein the housing (44) of the at least one secondary operating device (6) is arranged adjacent to the housing (24) of the main operating device (4) present next to said secondary operating device.

3. Elevator installation (1) according to either of the preceding claims, in which a main operating device (6) comprises:
a touch-sensitive screen (46) which is configured to display input fields assigned to destination floors, to detect a touch of one of the input fields, and to display travel information determined for a destination call, and
an audio device (38) which is configured to announce the determined travel information.

4. Elevator installation according to any of the preceding claims, in which the main operating devices (4) and the at least one secondary operating device (6) are communicatively connected to the elevator controller (8, 12) by a communication network (22).

5. Elevator installation according to claim 4, in which the communication network (22) is configured to transmit electrical energy and in which the main operating devices (4) and the at least one secondary operating device (6) are configured to be supplied with electrical energy by the communication network (22).

6. Elevator installation according to any of the preceding claims, in which the touch-sensitive screen system (68) of the secondary operating device (6) comprises an actuator (62) which, when actuated by a control voltage, causes a surface of the screen system (68) to vibrate, wherein the vibration is the tactilely perceptible feedback.

7. Elevator installation according to any of the preceding claims, in which the touch-sensitive screen system (68) of the secondary operating device (6) comprises a force measuring device (60) and a control device (58), wherein the force measuring device (60) is configured to measure a force with which a passenger (P) presses on a user interface (48) of the touch-sensitive screen system (68), and wherein the control device (58) is configured to only register the measured force as a triggering force if the measured force reaches a specified threshold value.

8. Elevator installation according to any of the preceding claims, in which each main operating device (4) is configured to participate in the determination of travel information for an input destination floor.

9. Method for operating an elevator installation (1) according to any of claims 1-8, wherein main operating devices (4) which are communicatively connected to an elevator controller (8, 12) are arranged on floors (L, L1, L2), and at least one secondary operating device (6) is arranged on one of the floors (L, L1, L2) separately from the main operating device (4) arranged there and is communicatively connected to the elevator controller (8, 12), wherein the at least one secondary operating device (6) has a touch-sensitive screen system (68) which is configured to confirm a destination floor input by a touch by means of tactilely perceptible feedback in order to support a passenger (P) with a physical limitation when inputting a call, comprising:
receiving a destination call input by a passenger (P) by means of the elevator controller (8, 12);
determining a first identifier by means of the elevator controller (8, 12) using the destination call, wherein the first identifier identifies the main operating device (4, 6) or the at least one secondary operating device (6) from which the received destination call originates;
determining travel information for the received destination call by means of the elevator controller (8, 12);
if the destination call originates from the at least one secondary operating device (6), determining a second identifier by means of the elevator controller (8, 12) that identifies a main operating device (6) which is arranged next to the at least one secondary operating device (6) on the floor; and
communicating the travel information determined for the destination call input on the at least one secondary operating device (6) to the passenger (P) by means of the main operating device (4) identified by the second identifier, wherein the communication takes place by means of the elevator controller (8, 12).

10. Method according to claim 9, wherein input fields assigned to destination floors are displayed by a touch-sensitive screen (46) of a main operating device (6), a touch of one of the input fields is detected and travel information determined for a destination call is displayed, and wherein the determined travel information is announced by an audio device (38).

11. Method according to any of claims 9-10, wherein the touch-sensitive screen system (68) of the at least one secondary operating device (6) comprises an actuator (62), by means of which a vibration of a surface of the screen system (68) is caused when said actuator is actuated by a control voltage, wherein the vibration is the tactilely perceptible feedback.

12. Method according to any of claims 9-11, wherein the touch-sensitive screen system (68) of the secondary operating device (6) comprises a force measuring device (60) and a control device (58), wherein a force with which a passenger (P) presses on a user interface (48) of the touch-sensitive screen system (68) is measured by the force measuring device (60), and wherein the measured force is only registered as a triggering force by the control device (58) if the measured force reaches a specified threshold value.

## Revendications

1. Installation d'ascenseur (1), dans laquelle un certain nombre de cabines d'ascenseur (10) commandées par une commande d'ascenseur (8, 12) peuvent se déplacer entre des étages (L, L1, L2), présentant :
des dispositifs de manoeuvre principaux (4) connectés de manière communicative à la commande d'ascenseur (8, 12) et disposés aux étapes (L, L1, L2), un dispositif de manoeuvre principal (4) étant configuré pour l'entrée d'un étage de destination souhaité par un passager (P) et pour la sortie d'informations de trajet, et
au moins un dispositif de manoeuvre secondaire (6) disposé à l'un des étages (L, L1, L2), près du dispositif de manoeuvre principal (4) disposé audit étage, et connecté de manière communicative à la commande d'ascenseur (8, 12), **caractérisée en ce que**
l'au moins un dispositif de manoeuvre secondaire (6) possède un système d'écran (68) tactile et configuré pour confirmer, par une réponse perceptible de manière tactile, un étage de destination entré par un toucher, afin d'aider un passager (P) ayant un handicap physique à saisir une entrée d'appel, et
la commande d'ascenseur (8, 12) est configurée pour détecter des informations de trajet pour l'étage de destination entré au niveau de l'au moins un dispositif de manoeuvre secondaire (6) et pour communiquer lesdites informations de trajet détectées au passager (P) à l'aide du dispositif de manoeuvre principal (4) disposé près de l'au moins un dispositif de manoeuvre secondaire (6).

2. Installation d'ascenseur (1) selon la revendication 1, dans laquelle chaque dispositif de manoeuvre principal (4) possède un boîtier (24) et dans laquelle l'au moins un dispositif de manoeuvre secondaire (6) possède un boîtier (44), le boîtier (44) de l'au moins un dispositif de manoeuvre secondaire (6) étant disposé adjacent au boîtier (24) du dispositif de manoeuvre principal (4) se trouvant près dudit dispositif de manoeuvre secondaire.

3. Installation d'ascenseur (1) selon l'une quelconque des revendications précédentes, dans laquelle un dispositif de manoeuvre principal (6) comprend :
un écran (46) tactile configuré pour afficher des champs d'entrée associés à des étages de destination, pour reconnaître un toucher de l'un des champs d'entrée et pour afficher des informations de trajet détectées pour un appel de destination, et
un dispositif audio (38) configuré pour annoncer les informations de trajet détectées.

4. Installation d'ascenseur selon l'une quelconque des revendications précédentes, dans laquelle les dispositifs de manoeuvre principaux (4) et l'au moins un dispositif de manoeuvre secondaire (6) sont connectés de manière communicative à la commande d'ascenseur (8, 12) à l'aide d'un réseau de communication (22).

5. Installation d'ascenseur selon la revendication 4, dans laquelle le réseau de communication (22) est configuré pour un transfert d'énergie électrique et dans laquelle les dispositifs de manoeuvre principaux (4) et l'au moins un dispositif de manoeuvre secondaire (6) sont configurés pour être alimentés en énergie à l'aide du réseau de communication (22).

6. Installation d'ascenseur selon l'une quelconque des revendications précédentes, dans laquelle le système d'écran (68) tactile du dispositif de manoeuvre secondaire (6) comprend un actionneur (62) qui cause une vibration d'une surface du système d'écran (68) en cas de commande au moyen d'une tension de commande, la vibration représentant la réponse perceptible de manière tactile.

7. Installation d'ascenseur selon l'une quelconque des revendications précédentes, dans laquelle le système d'écran (68) tactile du dispositif de manoeuvre secondaire (6) comprend un dispositif de mesure de force (60) et un dispositif de commande (58), le dispositif de mesure de force (60) étant configuré pour mesurer une force avec laquelle un passager (P) appuie sur une surface de manoeuvre (48) du système d'écran (68) tactile, et le dispositif de commande (58) étant configuré pour n'enregistrer la force mesurée comme force de déclenchement que lorsque la force mesurée atteint une valeur seuil prédéfinie.

8. Installation d'ascenseur selon l'une quelconque des revendications précédentes, dans laquelle chaque dispositif de manoeuvre principal (4) est configuré pour coopérer pour un étage de destination entré lorsque des informations de trajet sont détectées.

9. Procédé permettant la manoeuvre d'une installation d'ascenseur (1) selon l'une des revendications 1 à 8, dans lequel des dispositifs de manoeuvre principaux (4) connectés de manière communicative à une commande d'ascenseur (8, 12) sont disposés à des étages (L, L1, L2), et au moins un dispositif de manoeuvre secondaire (6) est disposé à l'un des étages (L, L1, L2) de manière à être séparé du dispositif de manoeuvre principal (4) qui y est disposé et est connecté de manière communicative à la commande d'ascenseur (8, 12), l'au moins un dispositif de manoeuvre secondaire (6) possédant un système d'écran (68) tactile configuré pour confirmer, par une réponse perceptible de manière tactile, un étage de destination entré par un toucher, afin d'aider un passager (P) ayant un handicap physique à saisir une entrée d'appel, comprenant :
la réception par la commande d'ascenseur (8, 12) d'un appel de destination entré par un passager (P) ;
la détection par la commande d'ascenseur (8, 12) d'une première identification au moyen de l'appel de destination, la première identification identifiant le dispositif de manoeuvre principal (4, 6) ou l'au moins un dispositif de manoeuvre secondaire (6) duquel provient l'appel de destination reçu ;
la détection par la commande d'ascenseur (8, 12) d'informations de trajet pour l'appel de destination reçu ;
lorsque l'appel de destination provient de l'au moins un dispositif de manoeuvre secondaire (6), la détection par la commande d'ascenseur (8, 12) d'une seconde identification qui identifie un dispositif de manoeuvre principal (6) disposé à l'étage, près de l'au moins un dispositif de manoeuvre secondaire (6) ; et
la communication des informations de trajet détectées pour l'appel de destination entré au niveau de l'au moins un dispositif de manoeuvre secondaire (6) au passager (P) à l'aide du dispositif de manoeuvre principal (4) identifié par la seconde identification, la communication s'effectuant par la commande d'ascenseur (8, 12).

10. Procédé selon la revendication 9, dans lequel des champs d'entrée associés à des étages sont affichés grâce à un écran (46) tactile d'un dispositif de manoeuvre principal (6), un toucher de l'un des champs d'entrée est constaté et des informations de trajet détectées sont affichées pour un appel de destination, et les informations de trajet détectées étant annoncées par un dispositif audio (38).

11. Procédé selon l'une des revendications 9 à 10, dans lequel le système d'écran (68) tactile de l'au moins un dispositif de manoeuvre secondaire (6) comprend un actionneur (62) qui provoque une vibration d'une surface du système d'écran (68) en cas de commande au moyen d'une tension de commande, la vibration représentant la réponse perceptible de manière tactile.

12. Procédé selon l'une des revendications 9 à 11, dans lequel le système d'écran (68) tactile du dispositif de manoeuvre secondaire (6) comprend un dispositif de mesure de force (60) et un dispositif de commande (58), une force avec laquelle un passager (P) appuie sur une surface de manoeuvre (48) du système d'écran (68) tactile étant mesurée au moyen du dispositif de mesure de force (60), et la force mesurée n'étant enregistrée comme force de déclenchement au moyen du dispositif de commande (58) que lorsque la force mesurée atteint une valeur seuil prédéfinie.
